# EUROPEAN PATENT SPECIFICATION

(11) **EP 3 079 454 B1**
(45) Date of publication and mention of the grant of the patent: **21.02.2018**
(21) Application number: 14811830.0
(22) Date of filing: 08.12.2014
(51) Int. Cl.: A01B 73/04, A01D 78/10

(54) **AGRICULTURAL WORKING TOOL WITH TRANSPORT CONFIGURATION**
LANDWIRTSCHAFTLICHE ARBEITSVORRICHTUNG MIT TRANSPORTKONFIGURATION
OUTIL DE TRAVAIL AGRICOLE AYANT UNE CONFIGURATION DE TRANSPORT

(30) Priority: 12.12.2013 GB 201321992
(43) Date of publication of application: 19.10.2016
(73) Proprietor: AGCO Feucht GmbH, 90537 Feucht (DE)
(72) Inventor: ANGLEITNER, Klaus, 90537 Feucht (DE)
(74) Representative: AGCO Intellectual Property Department
(86) International application number: PCT/EP2014/076897
(87) International publication number: WO 2015/086533

(56) References cited:
- EP-A1- 1 275 292
- WO-A1-99/12407
- DE-U1-202011 107 678

## Description

### TECHNICAL FIELD

The invention relates to agricultural working tools for attachment to agricultural tractors, the tools having a wheeled chassis and a plurality of working units mounted to a support frame that is foldable from an operating configuration to a transport configuration.

### BACKGROUND

Due to large working widths, many agricultural tools or implements have a transport configuration which enables them to be moved on public roads. In the transport configuration a frame of the tool is pivoted or folded so that parts which extend beyond the maximum permitted transport width are moved into a position within the permitted width (which is in the order of 2.5 - 3.5 metres depending on the country concerned).

The frame of some tools, such as tillage machines, planters and hay tedders, include a centre portion from which side wings are hinged around respective generally longitudinal axes, wherein the wings fold upwardly and inwardly from a working configuration. Larger working widths have led to an increase in the width of the frame wings which, when folded, extend to a height which is impractical for storage and potentially dangerous for transport.

It is known to provide a wheeled chassis with a 'transport tray' in front of the centre frame. In the transport configuration of such machine, the centre frame is pivotably mounted to the chassis about a generally transverse axis so that the raised wings can be lowered onto the tray thus lowering the centre of gravity of the overall machine and supporting the weight of the folded tool in a more robust way.

German utility model DE-20 2011 107 678 U1 discloses a tedder having a folding mechanism as described. A relatively long hydraulic cylinder is employed to pivot the centre frame about a transverse folding axis so as to fold the frame into a transport position.

When in the extended position, such a long hydraulic cylinder is fragile and subject to bending under its own weight and external forces. If bent beyond the elastic threshold, the cylinder will fail. Ultimately this places a limit on the achievable size of the machine and the achievable working width.

### SUMMARY OF INVENTION

It is an object of the invention to improve the robustness of the folding mechanism of an agricultural working tool having a transport configuration.

In accordance with the invention there is provided an agricultural working tool for attachment to a tractor, the tool comprising a wheeled chassis and a plurality of working units mounted to a support frame that is foldable from an operating configuration to a transport configuration, the support frame comprising a centre frame and a pair of side frame assemblies, the centre frame being pivotably mounted to the chassis about a transversely-extending first folding axis, and each side assembly being pivotably mounted to the centre frame about respective second folding axes that extend in a substantially fore and aft direction when the support frame is in the operating configuration, the side assemblies being foldable upwardly and inwardly about the second folding axes from the operating configuration, the tool further comprising a linear actuator system connected between the chassis and the centre frame and arranged to control movement of the centre frame about the first folding axis, the linear actuator system comprising a first linear actuator connected between the chassis and a rocker arm which is pivotably mounted to the chassis about a transverse pivot axis, and a second linear actuator connected between the rocker arm and the centre frame.

Advantageously, by replacing a single long actuator with a pair of actuators and a rocker arm, a more robust mechanism is provided thus reducing the likelihood of failure.

The tool may further comprise an actuator control system arranged to sequentially operate the first and second linear actuators in response to control signals received from an attached tractor. By operating the actuators in sequence one, more robust, actuator can be employed to carry out a lift function is association with the rocker arm, whilst a second, lighter, actuator can serve to unfold the centre frame with respect to the wheeled chassis.

The actuator control system is preferably configured to:
(a) extend the first linear actuator before extending the second linear actuator; and,
(b) retract the second linear actuator before retracting the first linear actuator.

Preferably the first and second linear actuators each comprise at least one hydraulic cylinder. Alternatively, electric linear actuators can be employed.

In the case of hydraulic actuators, one or more valves may be provided to control the sequential activation, the valves responding to mechanical, hydraulic or electrical signals which are generated in response to an actuator reaching a predetermined position. For example, a rocker arm position sensor may be provided in communication with the actuator control system, wherein the second linear actuator is extended in response to a signal received from the rocker arm position sensor.

Alternatively, or in addition to, one or more of the hydraulic cylinders may comprise valves integrated into the housing, the valves operating manually via a linkage engaged by the piston of the cylinder.

In a preferred arrangement the first linear actuator comprises a first hydraulic cylinder and the second linear actuator comprises a second hydraulic cylinder, wherein the first hydraulic cylinder comprises a cylinder housing, a chamber, a piston having a movement range, and first and second ports disposed on respective sides of the piston for delivering pressurised fluid to move the piston within the chamber, wherein an end portion of the housing accommodates a third port hydraulically connected to the second hydraulic cylinder and a fourth port hydraulically connected to a hydraulic pressure source, the third and fourth ports connected by a fluid passage disposed in said end portion, wherein a valve located in the fluid passage is biased into a closed position and is opened by a plunger which is pushed by the piston when at one end of said movement range. The first port and the fourth port are preferably connected to a common hydraulic pressure source. In this case, the second hydraulic cylinder is only operated once the first hydraulic cylinder is fully extended.

The second linear actuator may comprise two hydraulic cylinders arranged in series and which share a common piston rod. Such a "dual cylinder" arrangement requires fewer components than employing two separate cylinders and occupies less space on the machine.

The tool may further comprise a respective wing-control hydraulic cylinder associated with each side assembly and each connected between the centre frame and the side assembly and arranged to control movement of the associated side assembly about the second folding axes, wherein the actuator control system is configured to extend the first linear actuator before extending the wing-control hydraulic cylinders.

The actuator control system may be configured to extend the second linear actuator and wing-control hydraulic cylinders simultaneously. Advantageously, when the second actuator is provided with a double hydraulic cylinder arrangement, a first of the hydraulic cylinders can be connected in parallel with the wing-control cylinders to effect the simultaneous unfolding stage.

Each side assembly may comprise an inner wing pivotably mounted to the centre frame and an outer wing pivotably mounted to the inner wing about respective fore and aft folding axes, the tool further comprising respective linear actuators each connected between one inner wing and the adjacent outer wing. The provision of multiple wing sections allows for greater working widths without breaching safe height thresholds during the folding operation.

The invention lends itself particularly well to hay tedders which have a relatively low weight-to-working width ratio. However, alternative working units can be mounted to the support frame and it is envisaged that the invention could be applied to other agricultural tools such as planters and tillage implements.

### BRIEF DESCRIPTION OF SPECIFIC EMBODIMENTS

Further advantages of the invention will become apparent from reading the following description of a specific embodiment with reference to the appended drawings in which:-
Figure 1 is a highly schematic plan view of a agricultural tedder in a working configuration;
Figure 2 is a perspective view of an agricultural tedder in accordance with an embodiment of the invention shown in a working configuration;
Figure 3 is a side view of a front part of the tedder of Figure 2 in a working configuration;
Figure 4 is a perspective view of the front part of the tedder of Figure 3;
Figure 5 is a side view of a front part of the tedder of Figure 2 in a transport configuration with some parts omitted for clarity;
Figure 6 is a perspective view of the front part of the tedder of Figure 5;
Figure 7 shows a hydraulic control circuit embodied in the tedder of Figure 2;
Figure 8 is a schematic view of a hydraulic system suitable for embodying in a hydraulic control system for the tedder of Figure 2; and,
Figure 9 is a vertical section through one hydraulic cylinder of the system shown in Figure 8.

### DETAILED DESCRIPTION OF SPECIFIC EMBODIMENT

The following description will make use of directional terms which are used in relation to the forward direction of travel F. The term "longitudinal" will typically refer to a direction parallel to the forward direction of travel, whereas the term "transverse" will mean a horizontal direction perpendicular to the forward direction of travel.

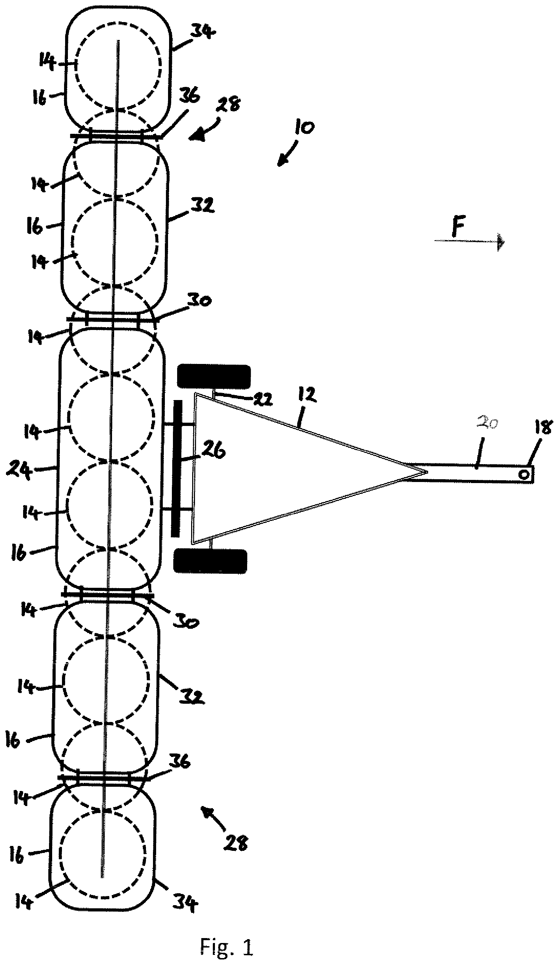

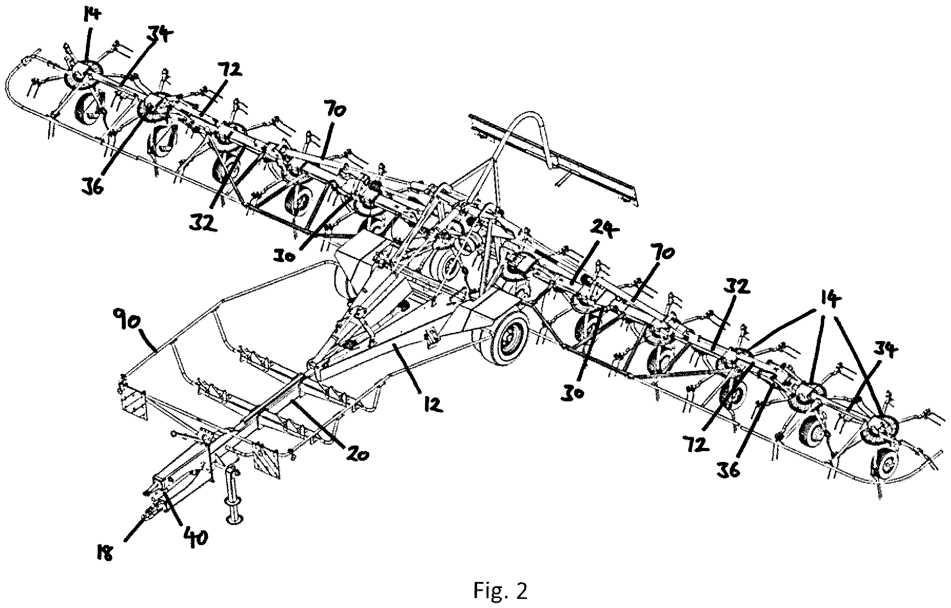

With reference to Figures 1 and 2, an agricultural hay tedder 10 comprises a wheeled chassis 12 and a plurality of rotors 14 mounted to a support frame 16. The invention will be described hereinafter as embodied in the hay tedder 10. However, it should be understood that the invention could instead be embodied in other working tools, for example, a planter having a plurality of planting units.

Wheeled chassis 12 comprises at a front end a drawbar 18 for attachment to a towing hitch of a tractor (not shown). A longitudinal tongue 20 extends rearwardly from the drawbar 18 to a widened part of the chassis 12 which supports a transverse axle 22.

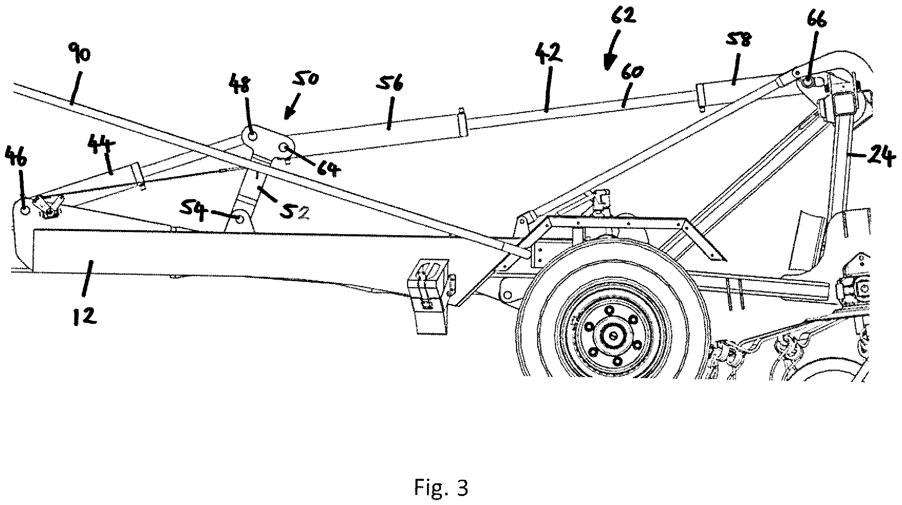

Pivotably mounted to the rear of chassis 12 is a centre frame 24. A transverse hinge arrangement 26 permits the centre frame to rotate about the hinge axis from a deployed or *working* position (Figs. 1 and 2), to a raised *headland* position, and to a fully folded *transport* position. It should be understood that the hinge arrangement 26 may take several different forms and is shown in highly schematic form in Figure 1. The embodiment illustrated in Figure 3 for example includes a centre frame 24 that pivots around a transverse axis hidden from view by the wheel shown.

In the working position the centre frame 26 resides behind the chassis so as to position the rotors 14 near to the ground as required during the tedding operation.

The support frame 16 further comprises a pair of side frame assemblies 28 each being pivotably mounted to the centre frame 24 about respective hinge arrangements 30 which extend in a fore and aft (longitudinal) direction when in the working configuration. Each side frame assembly 28 includes an inner wing 32 pivotably mounted to the centre frame 24 and an outer wing 34 pivotably mounted to the inner wing 32 about respective hinge arrangements 36. Again, the hinge arrangements 30,36 may be provided with a host of alternative constructions. However, in each case, the hinge arrangement defines a longitudinal pivoting or folding axis.

In the working position the support frame 16 has an elongate axis which extends transversely and defines the working width of the tedder 10. The support frame supports the rotors 14 from above. Torque derived from a power take off (PTO) shaft 40 attached to the tractor is transmitted to the rotors 14 via a driveline including various drive shafts and gearboxes also supported by the frame 26.

Each hinged arrangement 26,30,36 has associated therewith one or more hydraulic cylinders to control movement of the pivotably connected members around the respective folding axes defined by the associated pivot joint.

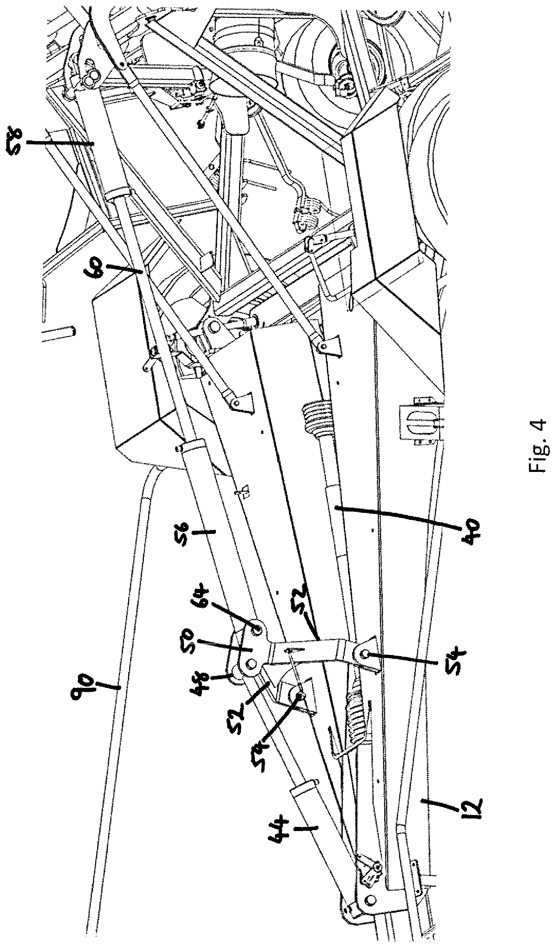

With reference to Figures 3 and 4, a hydraulic cylinder arrangement 42 is connected between the chassis 12 and the centre frame 24. In the hydraulic cylinder arrangement 42, a first hydraulic cylinder 44 is connected between a pivoting joint 46 located at the front region of chassis 12 and a pivoting joint 48 provided in an upper region of a rocker arm 50 which comprises a pair of inwardly tapering arm members 52 each pivotably mounted to the chassis 12 for movement around a transverse axis defined by securing pins 54. Extension and retraction of first hydraulic cylinder 44 serves to move rocker arm 50 backward and forward respectively about pin 54.

Second and third hydraulic cylinders 56,58 are joined by a common piston rod 60, together forming a series-arranged dual hydraulic cylinder arrangement 62 which is connected between a pivotable joint 64 in the upper region of the rocker arm and a pivotable joint 66 on the centre frame 24. Despite sharing a piston rod 60, the pistons (not shown) of second and third cylinders 56,58 may have a different diameter.

Extension of one or both of the second and third cylinders 56,58 pivots the centre frame about the hinge arrangement 26 so as to unfold or lower the centre frame to the ground. Retraction of one or both of the second and third cylinders 56,58 pivots the centre frame about the hinge arrangement 26 so as to fold or raise the centre frame. The folding and unfolding sequences between the transport, headland and working configurations will be described in more detail below.

Connected between respective ones of the inner wings 32 and the centre frame 24 are dual inner wing hydraulic cylinders 70 (Fig. 2) for controlling pivoting movement of the inner wings 32 about respective hinge arrangements 30. Each dual cylinder 70 comprises a two-way main cylinder 70' which serves to fold and unfold the inner wings 32 between the transport and headland configurations, and a one-way auxiliary cylinder 71 which serves to raise and lower the inner wings 32 between the working and headland configurations.

Similarly, dual outer wing hydraulic cylinders 72 are connected between respective ones of the outer wings 34 and the respective adjacent inner wing 32 for controlling pivoting movement of the outer wings 34 relative to the inner wings 32 about respective hinge arrangements 36. Each dual cylinder 72 comprises a two-way main cylinder 72' which serves to fold and unfold the outer wings 34 between the transport and headland configurations, and a one-way auxiliary cylinder 73 which serves to raise and lower the outer wings 34 between the working and headland configurations.

All hydraulic cylinders 44,56,58,70,72 are connected hydraulically to the tractor which supplies pressurised fluid thereto in response to operator commands. A control system will be described below.

Although the described embodiment includes hydraulic cylinders, other linear actuators may be used instead without deviating from the scope of the invention. For example, electric linear actuators could be used in place of the hydraulic cylinders described.

The different configurations and movement therebetween will now be described.

### Working configuration

In the working configuration all hydraulic cylinders 44,56,58,70,72 are fully extended and the support frame 24 is completely unfolded. In this mode, the rotors are rotateably driven around substantially vertical axes and crop-engaging tines attached thereto ted crop swaths as the machine 10 is driven across a field.

### Headland configuration

Upon reaching the end of the swaths, typically on the headland of a field, the frame 26, and thus rotors 14, are lifted into a headland position so as to not disturb the headland swaths during turning. From the working configuration third cylinder 58 is retracted so as to pivot the entire support frame 24 around hinge 26 and, as a result, lift the rotors. Also, the auxiliary wing cylinders 71,73 are retracted to partially lift the outer sides of wings 32,34 and increase the ground clearance for the rotors 14.

It will be apparent that cylinders 58,71,73 serve to switch the machine between working and headland modes and, as such, are preferably controlled by a separate hydraulic line (described in more detail below). Cylinders 58,71,73 need only be single-acting because the weight of the lifted frame 24 and rotors 14 serves to provide a lowering force.

When returning to the working position, all cylinders 58,71,73 are returned to their fully extended positions.

### Transport configuration

The support frame 24 is foldable about hinge axes 26,30,36 into a transport configuration which is narrower and thus suitable for movement on public highways. From either the headland position described above the process of folding the support frame comprises a sequence of folding stages.

In a first stage of folding, second hydraulic cylinder 56 is fully retracted so as to pivot the support frame 24 around the transverse hinge 26. At the same time the wing cylinders 70',72' are fully retracted to fold the wings 34,32 upwardly and inwardly with respect to the centre frame 24. By simultaneously folding the centre frame 24 and the side assemblies 28, the height obtained by the extremities of the latter is reduced, in turn reducing the risk of impacting on tree branches or overhead power cables.

Following the first stage a significant proportion of the weight of the rotors 14 and support frame 24 is supported on rocker arm 50. Advantageously, the provision of the rocker arm reduces the stress on the hydraulic cylinders 44,56,58.

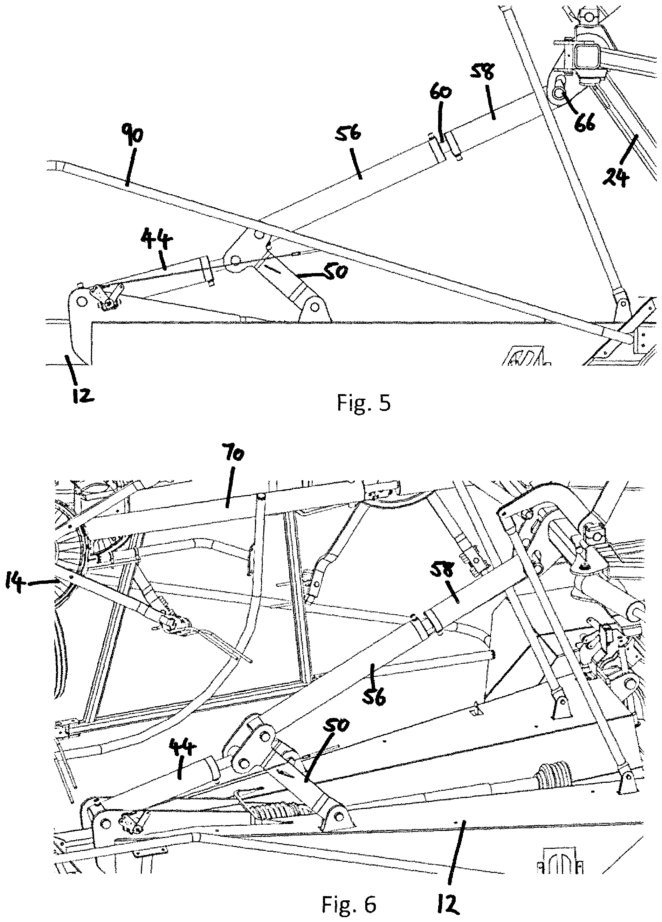

In a second stage of folding, first hydraulic cylinder 44 is fully retracted to the position shown in Figures 5 and 6. This lowers the folded frame 24 with rotors 14 onto a transport tray 90 which is secured to chassis 12. The transport tray 90 serves both to support the weight of the folded frame 24 and rotors 14 and as a guard to prevent damage to the rotors 14 during transport.

When unfolding from the transport configuration, the folding sequence is reversed. Therefore, the first cylinder 44 is extended before the second cylinder 56 and wing cylinders 70',72' are extended, (to remain in headland position the third cylinder 58 remains retracted).

### Hydraulic Control System

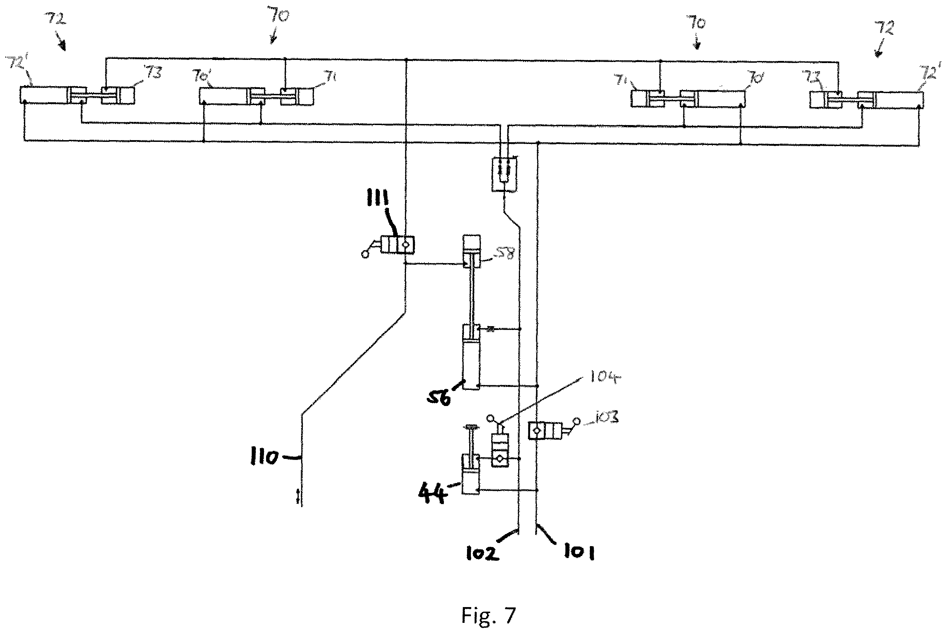

The hydraulic cylinders 44,56,58,70,72 are controlled by a hydraulic control system which may be purely hydraulic or electro-hydraulic. Figure 7 shows an example hydraulic circuit which will be described hereinafter.

First and second hydraulic lines 101,102 are connected to respective couplings of a two-way spool valve (not shown) of the attached tractor. Activation of the spool valve in response to a driver commands feeds pressurised fluid to one of the two hydraulic lines 101,102.

Starting from the transport configuration, a positive supply of pressurised fluid to first line 101 extends first hydraulic cylinder 44 in a first unfolding stage. Valve 103 opens in response to cylinder 44 reaching full extension and only then does fluid pass to second cylinder 56 and wing cylinders 70',72' to effect the second stage of the unfolding sequence.

Starting from the headland configuration, a positive supply of pressurised fluid to second line 102 retracts wing cylinders 70',72' and second cylinder 56 in a first folding stage. Valve 104 opens in response to second cylinder 56 reaching a fully retracted position and only then does fluid pass to first cylinder 44 to effect the second stage of the folding sequence.

A further, single-acting, hydraulic line 110 is connected to third cylinder 58 and auxiliary wing cylinders 71,73 for controlling the movement of the frame 24 between headland and working configurations. A valve 111 may be provided to ensure sequential control of folding around the transverse axis 26 before the longitudinal axes 30,36.

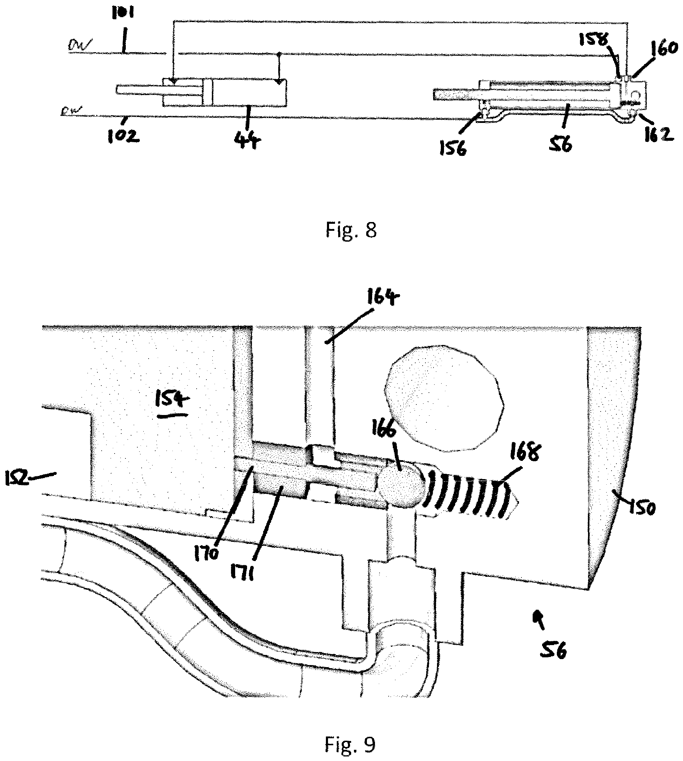

Figures 8 and 9 illustrate an example hydraulic arrangement which can be employed in the circuit of Figure 7 wherein valve 104 is effectively integrated into the housing of second cylinder 56. In this example, second hydraulic cylinder 56 comprises a cylinder housing 150, a chamber 152, and a piston 154 having a movement range between a fully retracted position and a fully extended position. First and second ports 156,158 supply fluid to respective sides of the piston 154 to control movement thereof. First port 156 is connected to line 102 to supply a hydraulic signal that retracts cylinder 56. Second port 158 is connected to line 101 to supply a hydraulic signal that extends cylinder 56.

An end portion of the housing 150 accommodates a third port 160 hydraulically connected to one side of the first hydraulic cylinder 44. The end portion also accommodates a fourth port 162 hydraulically connected to the first port 156 and line 102. The third and fourth ports 160,162 are connected by a fluid passage or bore 164 formed in the end portion.

The fluid passage 164 is substantially z-shaped having two radially extending passages joined by an axially extending passage.

In a right-angled part of the fluid passage an in-line valve 104 is provided which comprises a displaceable ball which is biased into a closed position by a compressed coil spring 168. Valve 166 is opened by an axially-extending plunger 170 which projects into the piston chamber 152 and is pushed by the piston 154 when the cylinder 56 is fully retracted.

The plunger 170 is supported within an axial bore 171 by a seal 172 which permits the plunger 170 to move axially whilst maintaining a seal between the piston chamber 152 and the fluid passage 164.

In the context of application in the hydraulic circuit of Figure 7, valve 166 serves the function of valve 104 wherein retraction of first cylinder 44 in the folding sequence is prevented until the second cylinder 56 is fully retracted.

It should be appreciated that an integrated valve may be provided in a cylinder housing of the first hydraulic cylinder 44 to serve the function of valve 103 instead of, or in addition to, the integrated valve 166 of second hydraulic cylinder 56 described above.

Instead of directly and mechanically sensing the position of the cylinder piston, in a not-illustrated alternative embodiment, an electrical sensor may be provided to sense the position of the rocker arm 50. An electrical signal from the sensor may be exploited to control electro-hydraulic valves so that the first and second cylinders 44,56 operate in sequence as required.

It should be understood that sequential operation of the multiple cylinders is not always essential. However, in the embodiment illustrated, any operation of the second cylinder 56 and/or wing cylinders 70,72 before first cylinder 44 is fully extended would likely cause damage to the rotors 14, support frame 16 and transport tray 90.

In summary there is provided an agricultural working tool for attachment to a tractor is provided. The tool, such as a tedder or planter, comprises a wheeled chassis and a plurality of working units mounted to a support frame. The support frame comprises a centre frame and a pair of side frame assemblies and is foldable from an operating configuration to a transport configuration. The centre frame is pivotably mounted to the chassis about a transversely-extending first folding axis. Each side assembly is pivotably mounted to the centre frame about respective second folding axes that extend in a substantially fore and aft direction when the support frame is in the operating configuration so that the side assemblies fold upwardly and inwardly about the second folding axes from the operating configuration. A linear actuator system is operable between the chassis and the centre frame and is arranged to control movement of the centre frame about the first folding axis. The linear actuator system comprises a first linear actuator connected between the chassis and a rocker arm which is pivotably mounted to the chassis about a transverse pivot axis, and a second linear actuator connected between the rocker arm and the centre frame. The linear actuators may be provided by one or more hydraulic cylinders.

## Claims

1. An agricultural working tool 10 for attachment to a tractor, the tool comprising a wheeled chassis 12 and a plurality of working units 14 mounted to a support frame 16 that is foldable from an operating configuration to a transport configuration, the support frame 16 comprising a centre frame 24 and a pair of side frame assemblies 28, the centre frame 24 being pivotably mounted to the chassis 12 about a transversely-extending first folding axis, and each side assembly 28 being pivotably mounted to the centre frame 24 about respective second folding axes that extend in a substantially fore and aft direction when the support frame 24 is in the operating configuration, the side assemblies 28 being foldable upwardly and inwardly about the second folding axes from the operating configuration, the tool 10 further comprising a linear actuator system 42 connected between the chassis 12 and the centre frame 24 and arranged to control movement of the centre frame 24 about the first folding axis **characterised in that** the linear actuator system 42 comprises a first linear actuator 44 connected between the chassis 12 and a rocker arm 50 which is pivotably mounted to the chassis about a transverse pivot axis, and a second linear actuator 62 connected between the rocker arm 50 and the centre frame 24.

2. An agricultural working tool 10 according to Claim 1, further comprising an actuator control system 42 arranged to sequentially operate the first and second linear actuators 44,62 in response to control signals received from an attached tractor.

3. An agricultural working tool 10 according to Claim 2, wherein the actuator control system 42 is configured to:
(a) extend the first linear actuator 44 before extending the second linear actuator 62; and,
(b) retract the second linear actuator 62 before retracting the first linear actuator 44.

4. An agricultural working tool 10 according to Claim 3, further comprising a rocker arm position sensor in communication with the actuator control system 42, wherein the second linear actuator 62 is extended in response to a signal received from the rocker arm position sensor.

5. An agricultural working tool 10 according to any preceding claim, wherein the first and second linear actuators 44,62 each comprise a hydraulic cylinder.

6. An agricultural working tool 10 according to Claims 3 and 5, wherein the first linear actuator 44 comprises a first hydraulic cylinder 44 and the second linear actuator comprises a second hydraulic cylinder 56, wherein the first hydraulic cylinder comprises a cylinder housing, a chamber, a piston having a movement range, and first and second ports 156,158 disposed on respective sides of the piston for delivering pressurised fluid to move the piston within the chamber, wherein an end portion of the housing accommodates a third port 160 hydraulically connected to the second hydraulic cylinder 56 and a fourth port 162 hydraulically connected to a hydraulic pressure source, the third and fourth ports connected by a fluid passage 164 disposed in said end portion, wherein a valve located in the fluid passage 164 is biased into a closed position and is opened by a plunger which is pushed by the piston when at one end of said movement range.

7. An agricultural working tool 10 according to Claim 6, wherein the first port 156 and the fourth port 162 are connected to a common hydraulic pressure source.

8. An agricultural working tool 10 according to any one of Claims 5 to 7, wherein the second linear actuator 62 comprises two hydraulic cylinders 56,58 arranged in series and which share a common piston rod 60.

9. An agricultural working tool 10 according to Claim 2 or 3, further comprising a respective wing-control hydraulic cylinder 71,73 associated with each side assembly and each connected between the centre frame 24 and the side assembly 28 and arranged to control movement of the associated side assembly 28 about the second folding axes, wherein the actuator control system is configured to extend the first linear actuator 42 before extending the wing-control hydraulic cylinders 71,73.

10. An agricultural working tool 10 according to Claims 8 and 9, wherein the actuator control system is configured to extend the second linear actuator 62 and wing-control hydraulic cylinders 71,75 simultaneously.

11. An agricultural working tool 10 according to Claim 9 or 10, wherein each side assembly 28 comprises an inner wing pivotably mounted to the centre frame 24 and an outer wing pivotably mounted to the inner wing about respective fore and aft folding axes, the tool 10 further comprising respective linear actuators each connected between one inner wing and the adjacent outer wing.

12. An agricultural tedder according to any preceding claim.

## Patentansprüche

1. Landwirtschaftliches Arbeitsgerät 10 zum Anhängen an einen Traktor, wobei das Gerät ein Chassis 12 mit Rädern und eine Mehrzahl von Arbeitseinheiten 14 aufweist, die an einem Tragrahmen 16 montiert sind, der von einer Betriebskonfiguration in eine Transportkonfiguration klappbar ist, wobei der Tragrahmen 16 einen Zentralrahmen 24 und ein Paar von Seitenrahmenanordnungen 28 aufweist, wobei der Zentralrahmen 24 schwenkbar um eine sich quer erstreckende erste Faltachse an dem Chassis 12 montiert ist und jede Seitenanordnung 28 um jeweils zugeordnete zweite Faltachsen, die sich in einer im Wesentlichen zwischen Front und Heck verlaufenden Richtung erstrecken, wenn sich der Tragrahmen 24 in der Betriebskonfiguration befindet, schwenkbar an dem Zentralrahmen 24 montiert ist, wobei die Seitenanordnungen 28 von der Betriebskonfiguration aufwärts und einwärts um die zweiten Faltachsen faltbar sind, wobei das Gerät 10 weiterhin ein Linearaktuatorsystem 42 aufweist, das zwischen dem Chassis 12 und dem Zentralrahmen 24 verbunden ist und das dazu angeordnet ist, eine Bewegung des Zentralrahmens 24 um die erste Faltachse zu steuern oder zu regeln, **dadurch gekennzeichnet, dass** das Linearaktuatorsystem 42 einen zwischen dem Chassis 12 und einem schwenkbar um eine quer verlaufende Schwenkachse an dem Chassis 12 befestigten Schwenkarm 50 montierten ersten Linearaktuator 44 und einen zwischen dem Schwenkarm 50 und dem Zentralrahmen 24 verbundenen zweiten Linearaktuator 62 aufweist.

2. Landwirtschaftliches Arbeitsgerät 10 nach Anspruch 1, das weiterhin ein Aktuator-Steuer-System oder Aktuator-Regel-System 42 aufweist, das dazu angeordnet ist, in Antwort auf von einem anhängenden Traktor empfangene Steuersignale oder Regelsignale den ersten und zweiten Linearaktuator 44, 62 sequentiell zu betreiben.

3. Landwirtschaftliches Arbeitsgerät 10 nach Anspruch 2, wobei das Aktuator-Steuer-System oder Aktuator-Regel-System 42 dazu ausgelegt ist:
(a) den ersten Linearaktuator 44 auszufahren, bevor der zweite Linearaktuator 62 ausgefahren wird; und
(b) den zweiten Linearaktuator 62 einzufahren, bevor der erste Linearaktuator 44 eingefahren wird.

4. Landwirtschaftliches Arbeitsgerät 10 nach Anspruch 3, das weiterhin einen Schwenkarmpositionssensor aufweist, der mit dem Aktuator-Steuer-System oder Aktuator-Regel-System in Austausch steht, wobei der zweite Linearaktuator 62 als Antwort auf ein von dem Schwenkarmpositionssensor empfangenes Signal ausgefahren wird.

5. Landwirtschaftliches Arbeitsgerät 10 nach einem der vorhergehenden Ansprüche, wobei der erste und zweite Linearaktuator 44, 62 jeweils einen Hydraulikzylinder aufweisen.

6. Landwirtschaftliches Arbeitsgerät 10 nach Ansprüchen 3 und 5, wobei der erste Linearaktuator 44 einen ersten Hydraulikzylinder 44 und der zweite Linearaktuator einen zweiten Hydraulikzylinder 56 aufweist, wobei der erste Hydraulikzylinder ein Zylindergehäuse, eine Kammer, einen Kolben mit einem Bewegungsbereich und erste und zweite Anschlüsse 156, 158 auf jeweiligen Seiten des Kolbens zum Zuführen von unter Druck stehendem Fluid zur Bewegung des Kolbens in der Kammer aufweist, wobei ein Endabschnitt des Gehäuses einen dritten Anschluss 160, der hydraulisch mit dem zweiten Hydraulikzylinder 56 verbunden ist, und einen vierten Anschluss 162, der hydraulisch mit einer hydraulischen Druckquelle verbunden ist, aufnimmt, wobei der dritte und vierte Anschluss durch eine in dem Endabschnitt angeordnete Fluidpassage 164 verbunden sind, wobei ein in der Fluidpassage 164 angeordnetes Ventil in eine geschlossene Position beaufschlagt und durch einen Stößel geöffnet wird, der von dem Kolben gedrückt wird, wenn sich dieser an einem Ende des Bewegungsbereichs befindet.

7. Landwirtschaftliches Arbeitsgerät 10 nach Anspruch 6, wobei der erste Anschluss 156 und der vierte Anschluss 162 mit einer gemeinsamen hydraulischen Druckquelle verbunden sind.

8. Landwirtschaftliches Arbeitsgerät 10 nach einem der Ansprüche 5 bis 7, wobei der zweite Linearaktuator 62 zwei in Serie angeordnete Hydraulikzylinder 56, 58 aufweist, die eine gemeinsame Kolbenstange 60 teilen.

9. Landwirtschaftliches Arbeitsgerät 10 nach Anspruch 2 oder 3, das weiterhin einen jeweiligen Flügelsteuerungszylinder oder Flügelregelhydraulikzylinder 71, 73 aufweist, der jeder Seitenanordnung zugeordnet ist, der jeweils zwischen dem Zentralrahmen 24 und der Seitenanordnung 28 montiert und angeordnet ist, um eine Bewegung der zugeordneten Seitenanordnung 28 um die zweiten Faltachsen zu steuern oder zu regeln, wobei das Aktuator-Steuer-System oder Aktuator-Regel-System dazu ausgelegt ist, den ersten Linearaktuator 42 auszufahren, bevor die Flügelsteuerungszylinder oder Flügelregelhydraulikzylinder 71, 73 ausgefahren werden.

10. Landwirtschaftliches Arbeitsgerät 10 nach Ansprüchen 8 und 9, wobei das Aktuator-Steuersystem oder Aktuator-Regelsystem dazu ausgelegt ist, den zweiten Linearaktuator 62 und die Flügelsteuerungszylinder oder Flügelregelhydraulikzylinder 71, 75 gleichzeitig auszufahren.

11. Landwirtschaftliches Arbeitsgerät 10 nach Anspruch 9 oder 10, wobei jede Seitenanordnung 28 einen schwenkbar an dem Zentralrahmen 24 montierten inneren Flügel und einen schwenkbaren an dem inneren Flügel montierten äußeren Flügel aufweist, die gegenüber jeweils zugeordneten sich zwischen Vorne und Hinten erstreckenden Faltachsen schwenkbar sind, wobei das Werkzeug 10 weiterhin jeweils zugeordnete Linearaktuatoren aufweist, die jeweils zwischen einem inneren Flügel und dem angrenzenden äußeren Flügel verbunden sind.

12. Landwirtschaftlicher Heuwender nach einem der vorhergehenden Ansprüche.

## Revendications

1. Outil de travail agricole (10) destiné à être fixé sur un tracteur, l'outil comprenant un châssis (12) équipé de roues et une pluralité d'unités de travail (14) montées sur un bâti de support (16) qui peut être plié depuis 'une configuration opérationnelle vers une configuration de transport, le bâti de support (16) comprenant un bâti central (24) et une paire d'ensembles de bâti latéraux (28), le bâti central (24) étant monté de manière à pouvoir pivoter sur le châssis (12) autour d'un premier axe de pliage s'étendant transversalement et chaque ensemble latéral (28) étant monté de manière à pouvoir pivoter sur le bâti central (24) autour de seconds axes de pliage respectifs qui s'étendent dans une direction sensiblement longitudinale lorsque le bâti de support (24) est dans la configuration opérationnelle, les ensembles latéraux (28) pouvant être pliés vers le haut et vers l'intérieur autour des seconds axes de pliage depuis la configuration opérationnelle, l'outil 10 comprenant en outre un dispositif à actionneurs linéaires (42) relié entre le châssis (12) et le bâti central (24) et agencé de manière à commander le mouvement du bâti central (24) autour du premier axe de pliage, **caractérisé en ce que** le dispositif à actionneurs linéaires (42) comprend un premier actionneur linéaire (44) relié entre le châssis (12) et un bras oscillant (50) qui est monté de manière à pouvoir pivoter par rapport au châssis autour d'un arbre de pivot transversal, et un second actionneur linéaire (62) relié entre le bras oscillant (50) et le bâti central (24).

2. Outil de travail agricole (10) selon la revendication 1, comprenant en outre un dispositif de commande d'actionneur (42) agencé afin d'activer de manière séquentielle les premier et second actionneurs linéaires (44, 62) en réponse à des signaux de commande reçus depuis un tracteur raccordé.

3. Outil de travail agricole (10) selon la revendication 2, dans lequel le dispositif de commande d'actionneur (42) est configuré de manière à :
(a) étendre le premier actionneur linéaire (44) avant d'étendre le second actionneur linéaire (62) ; et
(b) rétracter le second actionneur linéaire (62) avant de rétracter le premier actionneur linéaire (44).

4. Outil de travail agricole (10) selon la revendication 3, comprenant en outre un capteur de position de bras oscillant en communication avec le dispositif de commande d'actionneur (42), dans lequel le second actionneur linéaire (62) s'étend en réponse à un signal reçu depuis le capteur de position de bras oscillant.

5. Outil de travail agricole (10) selon l'une quelconque des revendications précédentes, dans lequel les premier et second actionneurs linéaires (44, 62) comprennent chacun un vérin hydraulique.

6. Outil de travail agricole (10) selon les revendications 3 et 5, dans lequel le premier actionneur linéaire (44) comprend un premier vérin hydraulique (44) et le second actionneur linéaire comprend un second vérin hydraulique (56), dans lequel le premier vérin hydraulique comprend un logement de vérin, une chambre, un piston présentant une plage de déplacement et des premier et deuxième orifices (156, 158) disposés sur les côtés respectifs du piston afin de délivrer un fluide sous pression de manière à déplacer le piston à l'intérieur de la chambre, dans lequel une partie d'extrémité du logement comporte un troisième orifice (160) raccordé hydrauliquement au second vérin hydraulique (56) et un quatrième orifice (162) raccordé hydrauliquement à une source de pression hydraulique, les troisième et quatrième orifices étant raccordés à un passage de liquide (164) disposé sur ladite partie d'extrémité, dans lequel une vanne située sur le passage de fluide (164) est appliquée dans une position fermée et est ouverte par un plongeur qui est poussé par le piston lorsqu'il est à une première extrémité de ladite plage de déplacement.

7. Outil de travail agricole (10) selon la revendication 6, dans lequel le premier orifice (156) et le quatrième orifice (162) sont raccordés à une source de pression hydraulique commune.

8. Outil de travail agricole (10) selon l'une quelconque des revendications 5 à 7, dans lequel le second actionneur linéaire (62) comprend deux vérins hydrauliques (56, 58) agencés en série et qui partagent une tige de piston commune (60).

9. Outil de travail agricole (10) selon la revendication 2 ou 3, comprenant en outre un vérin hydraulique respectif de commande d'aile (71, 73) associé avec chaque ensemble latéral, et chacun étant relié entre le bâti central (24) et l'ensemble latéral (28) et agencé de manière à commander le déplacement de l'ensemble latéral associé (28) autour des seconds axes de pliage, dans lequel le dispositif de commande d'actionneur est configuré de manière à étendre le premier actionneur linéaire (42) avant d'étendre les vérins hydrauliques de commande d'aile (71, 73).

10. Outil de travail agricole (10) selon les revendications 8 et 9, dans lequel le dispositif de commande d'actionneur est configuré de manière à étendre le second actionneur linéaire (62) et les vérins hydrauliques de commande d'aile (71, 73) de manière simultanée.

11. Outil de travail agricole (10) selon la revendication 9 ou 10, dans lequel chaque ensemble latéral (28) comprend une aile interne montée de manière à pouvoir pivoter sur le bâti central (24) et une aile externe montée de manière à pouvoir pivoter sur l'aile interne autour d'axes de pliage longitudinaux respectifs, l'outil (10) comprenant en outre des actionneurs linéaires respectifs chacun étant relié entre une première aile interne et l'aile externe adjacente.

12. Faneuse agricole selon l'une quelconque des revendications précédentes.
